(19)

**Europäisches Patentamt**
**European Patent Office**
**Office européen des brevets**

(11) **EP 4 760 609 A1**

(12) **EUROPEAN PATENT APPLICATION**

(43) Date of publication:
**17.06.2026 Bulletin 2026/25**

(51) International Patent Classification (IPC):
***G06N 20/00*** *(2019.01)*

(21) Application number: **25205156.0**

(22) Date of filing: **28.09.2025**

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 KR 20240183867**
       **19.08.2025 KR 20250114547**

(71) Applicant: **Korea Institute of Energy Technology Jeollanam-do 58330 (KR)**

(72) Inventors:
• **LIM, Hyuk**
  **58330 Naju-si, Jeollanam-do, (KR)**
• **YOON, Seung Hyun**
  **58330 Naju-si, Jeollanam-do, (KR)**
• **SUR, Gi Won**
  **58330 Naju-si, Jeollanam-do, (KR)**

(74) Representative: **Prüfer & Partner mbB**
       **Patentanwälte · Rechtsanwälte**
       **Sohnckestraße 12**
       **81479 München (DE)**

(54) **ASYNCHRONOUS FEDERATED LEARNING SYSTEM AND METHOD BASED ON INEFFECTIVE WEIGHT VECTOR DECOMPOSITION**

(57)    The present disclosure relates to an asynchronous federated learning system and an ineffective weight vector decomposition-based method for solving the problem of redundant reflection caused by ineffective components included in client's local model parameters in an asynchronous federated learning environment. More specifically, the present disclosure relates to a technology that calculates a difference vector between a global model used as a baseline when a client performed local training and a current global model held by a server, excludes ineffective components by removing components in the direction of the difference vector from the local model parameters, and reflects only components orthogonal to the difference vector in the global model update.

FIG. 2

## Description

CROSS-REFERENCE TO RELATED APPLICATIONS

This application claims the priority benefit of Korean Patent Application No. 10-2024-0183867, filed on December 11, 2024, and Korean Patent Application No. 10-2025-0114547, filed on August 18, 2025, in the Korean Intellectual Property Office, the disclosure of each of which is incorporated herein by reference.

## BACKGROUND OF THE DISCLOSURE

### Field of the Disclosure

The present disclosure relates to an asynchronous federated learning system and method based on ineffective weight vector decomposition for solving the problem where ineffective parameters are reflected in a global model update, and more specifically, to a technology for updating a global model by decomposing local model parameters based on a difference vector between a global model at the time of local training execution and a current global model, and by removing ineffective components to reflect only effective learning components.

### Description of the Related Art

In recent years, Federated Learning (FL) has gained attention as a privacy-preserving distributed learning framework that allows for the training of a collaborative model while user data remains stored on local devices.

In particular, asynchronous federated learning is a method designed to enable efficient learning even in environments where the timing of learning varies depending on a client's computational performance and communication resources, and it is being actively researched to enhance its practicality in asynchronous network conditions such as mobile devices or IoT environments.

For this purpose, researchers have proposed various asynchronous federated learning techniques, with representative examples including FedAsync, Fed-Buff, and Age-aware FL. These techniques adopt methods such as a server accepting client updates in real-time, temporarily holding and sorting them based on a buffer, or adjusting weights according to the staleness of client updates.

However, existing asynchronous federated learning methods have several technical limitations.

First, in an asynchronous environment, since a server's global model is continuously updated while a client is performing local training, a discrepancy arises between a global model used as a baseline by the client and the latest global model held by a server.

Consequently, client's local model parameters may include directional components that have already been reflected in the global model, i.e., ineffective parameters. If such components are reflected in the global model as is, it can lead to redundant learning and the accumulation of bias.

Furthermore, most existing methods simply adjust the importance of client updates based on staleness. However, this approach cannot determine in which direction each parameter actually contributed or whether it contains redundant information, leading to the limitation that even significant learning components can be underestimated.

Additionally, if ineffective components are repeatedly reflected in the global model, the learning convergence speed deteriorates, and accordingly, the number of communication rounds increases, leading to the problem of wasting overall communication resources.

Moreover, if ineffective parameters are continuously accumulated, the global model may be trained in a biased direction or lose convergence stability. This problem can lead to a more severe degradation in accuracy, especially in non-IID environments where data distribution differs among clients.

[Related Art Documents]

[Patent Documents]

Korean Patent No. 10-2555268, entitled "ASYMMETRIC CENTRALIZED TRAINING FOR DISTRIBUTED DEEP LEARNING"
Korean Patent No. 10-2403476, entitled "Distributed Deep Learning System and Its Operation Method"
Korean Patent No. 10-2156303, entitled "ASYNCHRONOUS DEEP REINFORCEMENT LEARNING"

## SUMMARY OF THE DISCLOSURE

Therefore, the present disclosure has been made in view of the above problems, and it is an object of the present disclosure to prevent the problem where ineffective components included in client's local model parameters are redundantly reflected in a global model update in an asynchronous federated learning environment.

It is another object of the present disclosure to decompose local model parameters according to the direction of a difference vector between a baseline global model and a current global model, and to reflect only effective components by removing ineffective directional components.

It is still another object of the present disclosure to overcome the limitations of existing staleness-based weight adjustment methods by analyzing an actual contribution direction at a parameter level.

It is still another object of the present disclosure to prevent the bias and convergence instability of the global model caused by the cumulative reflection of ineffective components, and to induce stable learning convergence.

It is still another object of the present disclosure to minimize information redundancy and improve communication efficiency and model accuracy by separating a client's update information into orthogonal components and ineffective components.

It is yet another object of the present disclosure to solve the staleness problem, which can occur in an asynchronous environment, using a quantitative parameter decomposition method. In accordance with an aspect of the present disclosure, the above and other objects can be accomplished by the provision of an asynchronous federated learning system based on ineffective weight vector decomposition for improving global model convergence by removing ineffective (weight staleness) model parameters in an asynchronous federated learning environment, the system including: a global model receiver for receiving a global model; a local model receiver for receiving local model parameters learned by a client based on the received global model; a difference vector calculator for calculating a difference vector between the global model and the local model parameters; a projection vector calculator for extracting a projection vector of the local model parameters based on the difference vector; an orthogonal vector extractor for extracting a vector in a direction orthogonal to the projection vector; and a global model updater for generating a modified global model by applying the orthogonal vector to the global model.

In accordance with another aspect of the present disclosure, provided is an asynchronous federated learning method based on ineffective weight vector decomposition, the asynchronous federated learning method including: receiving a global model; receiving local model parameters learned by a client based on the received global model; calculating a difference vector between the global model and the local model parameters; calculating a projection vector of the local model parameters based on the difference vector; extracting a vector in a direction orthogonal to the projection vector; generating a modified global model by applying the orthogonal vector to the global model; and transmitting the modified global model to a client.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a diagram explaining the structural difference between synchronous and asynchronous federated learning methods;
FIG. 2 is a diagram illustrating an asynchronous federated learning system based on ineffective weight vector decomposition;
FIG. 3 is a diagram illustrating the weight vector processing procedure based on FedSVD, which extracts the orthogonal component of a local update vector;
FIG. 4 is a diagram illustrating the decomposition process of an ineffective weight vector;
FIG. 5 is a diagram illustrating the model performance on the MNIST dataset according to changes in data distribution and the number of clients;
FIG. 6 is a diagram illustrating the model performance on the CIFAR-10 dataset according to changes in data distribution and the number of clients;
FIG. 7 is a diagram illustrating the performance of asynchronous federated learning on the MNIST dataset according to dropout scenarios;
FIG. 8 is a diagram illustrating the performance of asynchronous federated learning on the CIFAR-10 dataset according to dropout scenarios; and
FIG. 9 is a diagram illustrating a method for asynchronous federated learning based on ineffective weight vector decomposition.

## DETAILED DESCRIPTION OF THE DISCLOSURE

Specific structural and functional descriptions of embodiments according to the concept of the present disclosure disclosed herein are merely illustrative for the purpose of explaining the embodiments according to the concept of the present disclosure. Furthermore, the embodiments according to the concept of the present disclosure can be implemented in various forms and the present disclosure is not limited to the embodiments described herein.

The embodiments according to the concept of the present disclosure may be implemented in various forms as various modifications may be made. The embodiments will be described in detail herein with reference to the drawings. However, it should be understood that the present disclosure is not limited to the embodiments according to the concept of the present disclosure, but includes changes, equivalents, or alternatives falling within the spirit and scope of the present disclosure.

The terms such as "first" and "second" are used herein merely to describe a variety of constituent elements, but the constituent elements are not limited by the terms. The terms are used only for the purpose of distinguishing one constituent element from another constituent element. For example, a first element may be termed a second element and a second element may be termed a first element without departing from the scope of rights according to the concept of the present disclosure.

It will be understood that when an element is referred to as being "on", "connected to" or "coupled to" another element, it may be directly on, connected or coupled to the other element or intervening elements may be present. In contrast, when an element is referred to as being "directly on," "directly connected to" or "directly coupled to" another element or layer, there are no intervening elements or layers present. Other words used to describe the relationship between elements should be interpreted in a like fashion (e.g., "between," versus "directly between," "adjacent," versus "directly adjacent," etc.).

The terms used in the present specification are used to explain a specific exemplary embodiment and not to limit the present inventive concept. Thus, the expression of singularity in the present specification includes the expression of plurality unless clearly specified otherwise in context. Also, terms such as "include" or "comprise" in the specification should be construed as denoting that a certain characteristic, number, step, operation, constituent element, component or a combination thereof exists and not as excluding the existence of or a possibility of an addition of one or more other characteristics, numbers, steps, operations, constituent elements, components or combinations thereof.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present disclosure will now be described more fully with reference to the accompanying drawings, in which exemplary embodiments of the disclosure are shown. This disclosure may, however, be embodied in many different forms and should not be construed as limited to the exemplary embodiments set forth herein. Like reference numerals in the drawings denote like elements.

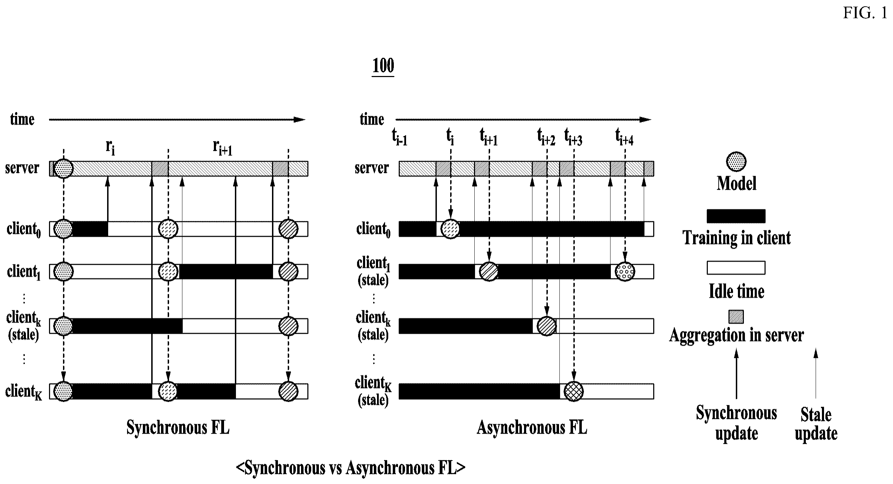

FIG. 1 is a diagram comparing and explaining federated learning environments in synchronous and asynchronous modes.

The left side of FIG. 1 illustrates the learning and model update structure of synchronous Federated Learning (FL). A server broadcasts a global model to clients (client$_0$, client$_1$, ..., client_K) at the start of a specific round (r_i), and each client performs local training based on the received global model.

After completing the learning, each client transmits its local model to the server, and the server waits until it receives responses from all clients.

Thereafter, the server updates the global model by averaging or weighted-averaging all the received local models (aggregation) and proceeds to the next round. In such a structure, synchronization is achieved by considering the time delay between clients, so the problem of stale updates, i.e., a local model trained based on an old global model being reflected on the server, rarely occurs.

The right side of FIG. 1 illustrates the learning and model update structure of asynchronous Federated Learning (FL).

A server operates continuously without a specific round basis and can receive a trained local model from some clients at arbitrary time intervals (t_i, t_{i+1}, ...).

Each client (client$_0$, client$_1$, ..., client_K) performs local model learning according to its own local schedule and transmits the model to the server after learning is complete.

The server immediately aggregates the received local model to update a global model, and the updated global model is either stored immediately or distributed to subsequent clients.

Parts indicated by gray arrows in the drawing corresponds to stale updates, representing a situation where a client performs an update by learning based on an old global model, and the result is reflected in the latest global model.

The 'Model' symbol in FIG. 1 represents the global model distributed by the server, the bar-shaped element signifies a local training process performed by the client, and the rectangular box represents a client's idle time. A model aggregation process performed at the server is represented by a separate bar, and the vertical arrow indicates an update direction from the client to the server. Among these, solid arrows signify synchronous updates, and dashed arrows signify stale update situations.

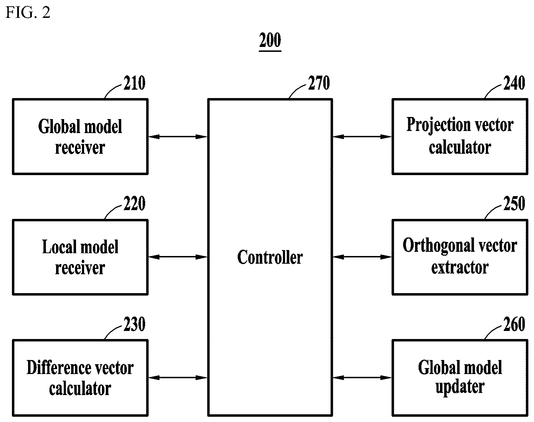

FIG. 2 is a diagram illustrating an asynchronous federated learning system 200 based on ineffective weight vector decomposition.

The asynchronous federated learning system 200 shown in FIG. 2 is a system for improving the convergence of the global model by removing ineffective (weight staleness) model parameters in an asynchronous federated learning environment, and includes a global model receiver 210, a local model receiver 220, a difference vector calculator 230, a projection vector calculator 240, an orthogonal vector extractor 250, a global model updater 260, and a controller 270.

The global model receiver 210 performs the function of receiving a current global model to provide it to clients and to be used as a reference for comparison with the response results from the clients later. The global model receiver 210 is located on the server side and plays the role of acquiring the latest global model information which is distinct from the global model used by the clients when they started local training.

The local model receiver 220 performs the function of receiving local model parameters that a client transmits to the server after completing local training. The local model receiver 220 is also configured to receive information about the global model that each client used at the time of starting local training, thereby enabling the identification of discrepancies between time points. Accordingly, the local model receiver 220 performs the role of collecting information that can be used to determine whether a model parameter is ineffective.

The difference vector calculator 230 performs the function of generating a difference vector by calculating a parameter difference between the received global model and the global model at the start of local training received from each client. The difference vector calculator 230 establishes a quantitative criterion for judging the effectiveness of the client's trained local model parameters based on the parameter difference between the global model used for training by that client and the current global model.

The projection vector calculator 240 performs the function of calculating a projection vector by performing an inner product operation on the local model parameters with respect to a normalized unit vector, based on the direction of the difference vector between the local model parameters and the global model, and multiplying the result by the said unit vector. The projection vector calculator 240 extracts a parameter vector having the same directional component as the global model and assumes this component to be an ineffective component that has a high probability of already having been reflected in the global model.

The orthogonal vector extractor 250 performs the function of calculating an orthogonal vector that includes only components orthogonal to the difference vector by subtracting the projection vector from the local model parameters. The orthogonal vector extractor 250 identifies components containing non-ineffective learning information and selectively extracts only orthogonal components so that they can be reflected in the global model in the future.

The global model updater 260 performs the function of generating a modified global model by multiplying the orthogonal vector by a preset global weight coefficient ($\eta$) and then adding the result to the current global model. The global model updater 260 is configured to maintain stable convergence of the global model by reflecting only the non-ineffective components.

The controller 270 performs the function of transmitting the modified global model generated by the global model updater 260 to each client, so that the client can perform subsequent local training.

According to one embodiment, the global model updater 260 plays the role of generating a modified global model based on the local model parameters received from the client and the current global model in the asynchronous federated learning system based on ineffective weight vector decomposition.

The global model updater 260 first receives, as an input, the difference vector between the local model parameters and the global model, which is calculated by a difference vector calculator (not shown). The global model updater 260, based on this difference vector, receives, together, a projection vector calculated from a projection vector calculator (not shown) and an orthogonal vector extracted from an orthogonal vector extractor (not shown).

The global model updater 260 calculates the cosine similarity between the projection vector and the update direction of the global model. If the cosine similarity is negative, the global model updater 260 determines that the corresponding projection vector and orthogonal vector act in a direction opposite to the convergence direction of the global model and prevents them from being reflected in the global model update.

Thereby, the global model updater 260 prevents the contamination of the global model that may arise from maliciously trained local models.

If the magnitude of the projection vector is larger than the magnitude of the global model's update vector, the global model updater 260 reflects the projection vector in the global model by adjusting its magnitude instead of simply removing it.

At this time, the global model updater 260 can reflect the entire projection vector or extract and reflect only the excess magnitude of the projection vector. The global model updater 260, if necessary, multiplies the projection vector and the orthogonal vector by a predefined scaling coefficient, respectively, to adjust them, and then reflects the result in the global model. Such an adjustment method enables a dynamic update strategy that simultaneously considers the convergence speed and learning stability of the global model.

The global model updater 260 maximizes learning efficiency and prevents redundant reflection by excluding the vector components in the direction already reflected, based on the difference between the global model at the time the local model parameters started learning and the current global model, and extracting only the unreflected orthogonal components and reflecting the extracted orthogonal components in the global model. As a result, the global model updater 260 prevents repetitive reflection due to stale updates and maintains the generalization performance of the model by reflecting only actually valid information.

Furthermore, if the update direction of the local model parameters trained by a client is opposite to the update direction of the current global model, the global model updater 260 determines that this update may be a malicious learning result that hinders model convergence, and completely excludes such projection and orthogonal vectors from the global model update. This determination is made based on whether the cosine similarity between the projection vector and the global model update direction is negative.

The global model updater 260 is configured to reflect only new information while maintaining the directionality of the global model by reflecting only the orthogonal vector, based on the fact that the orthogonal vector has a direction orthogonal to the existing update direction of the global model.

As such, the global model updater 260 improves the learning accuracy and convergence speed of the entire system by analyzing the characteristics of the projection and orthogonal vectors based on the ineffective parameters, and by updating the global model through comprehensive consideration for information such as the vector's direction, magnitude, and similarity.

The global model updater 260 finally enables the updated global model to be broadcast back to each client through a global model transmitter (not shown). In this process, the global model updater 260 continuously monitors the modified global model to ensure it is maintained in an optimal state without contamination from ineffective parameters, and implements a sophisticated federated learning process that reflects only meaningful updates while minimizing the impact of the client's learning results on the global model.

Furthermore, the asynchronous federated learning system 200 can be controlled to determine if the local model parameters are ineffective parameters. This is achieved by setting a threshold based on the number of updates or the Euclidean distance between the global model at the time the parameters were generated and the current global model, and performing the difference vector calculation and orthogonal vector extraction steps only when this threshold is exceeded.

Therefore, the asynchronous federated learning system 200 shown in FIG. 2 is implemented with a structure that enables stable and efficient global model convergence even in an asynchronous federated learning environment by quantitatively determining the ineffectiveness of local model parameters received from each client and updating the global model using only the orthogonal components from which the ineffective components have been removed.

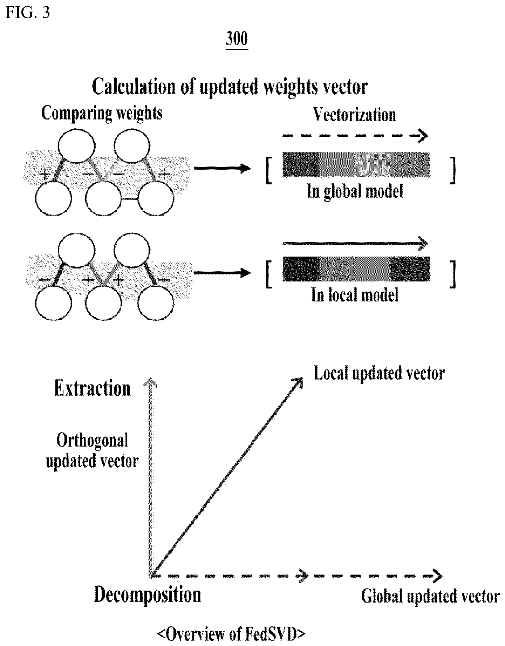

FIG. 3 is a sequential flowchart illustrating the three-step process of calculation, decomposition, and extraction performed by the global model updater 260 included in the asynchronous federated learning system based on ineffective weight vector decomposition.

The global model updater 260 first receives a local update vector calculated by the difference vector calculator 230, based on each client's local model parameters received through a local model receiver 220 and the global model parameters at the time the client started learning. At this time, the local update vector is defined as the difference between the local model parameters and the global model parameters at the start of learning, which represents the learning results performed on the client side.

In the calculation step, the global model updater 260 calculates the update direction of the global model based on the current global model parameters and defines it in vector form. Subsequently, the global model updater 260 receives the projection vector, which is the result of the operation performed by the projection vector calculator 240, and calculates the cosine similarity between the projection vector and the update direction of the global model to determine the degree of similarity the projection vector has with the global model's update vector.

In the decomposition step, the global model updater 260 constructs a projection vector by performing an inner product of the local model parameters with respect to a unit vector normalized in the direction of the difference vector, and then multiplying the result by the same unit vector. The global model updater 260 receives, together, the orthogonal vector calculated by the orthogonal vector extractor 250, which is a vector calculated by subtracting the projection vector from the local model parameters and contains only components orthogonal to the update direction of the global model.

In the extraction step, the global model updater 260 determines which vector, the projection vector or the orthogonal vector, will be reflected in the global model. The global model updater 260 first analyzes the cosine similarity between the projection vector and the global model update vector. If the similarity is negative, meaning the two vectors have opposite directions, it is configured not to reflect the corresponding projection vector and orthogonal vector in the global model update. This is a criterion to prevent global model contamination by malicious clients.

The global model updater 260 compares the magnitude of the projection vector with the magnitude of the current global model's update vector. If the magnitude of the projection vector is larger, it does not remove the vector but adjusts its magnitude to be reflected in the global model. At this time, the global model updater 260 may be configured to reflect only the excess magnitude of the projection vector in the global model, or to adjust the magnitude by multiplying a predefined scaling coefficient to each of the projection and orthogonal vectors, and then reflect the result in the global model.

Finally, the global model updater 260 generates a modified global model by summing the vector to be reflected (the projection vector, the orthogonal vector, or their combination) with the existing global model parameters. At this time, the modified global model, from which ineffective (stale) information has been removed and only new learning information is reflected compared to the existing global model, can simultaneously improve the convergence speed and accuracy of federated learning. At this time, the modified global model can simultaneously improve the convergence speed and accuracy of federated learning because, compared to the existing global model, ineffective (stale) information is removed and only new learning information is reflected.

The global model updater 260 transmits the modified global model back to the clients via the global model transmitter, and the modified global model is then used as an initial value for the client's subsequent local training. This process acts as a mechanism to solve the model parameter effectiveness problem caused by the time delay of each client in an asynchronous federated learning environment and to ensure stable global model convergence.

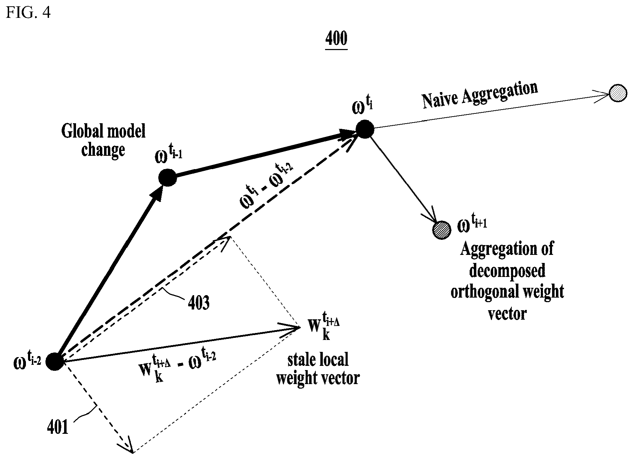

FIG. 4 is a diagram 400 explaining the decomposition process of an ineffective weight vector.

The decomposition process of the ineffective weight vector shown in FIG. 4 visually explains a series of processes for determining whether received local model parameters are ineffective (weight staleness) parameters in an asynchronous federated learning environment, and for updating the global model by removing redundant components contained in the parameters.

The server first defines the global model at the time the client performed local training as $\omega^{ti-2}$ and defines the current global model as $\omega^{ti}$, thereby calculating the global model change vector $\vec{v}_g = \omega^{ti} - \omega^{ti-2}$ which represents the update difference between the two global models.

Then, the server defines a difference between the local model parameter $w_k^{t_i+\Delta}$ received from client k and the global model $\omega^{ti-2}$ used by the client for learning as the local model change vector

$$\vec{v}_k = w_k^{t_i+\Delta} - \omega^{ti-2} .$$

The difference vector calculator calculates a projection vector to extract the ineffective parameter components included in the local model parameters based on the directionality between $\vec{v}_g$ and $\vec{v}_k$. The projection vector calculator first normalizes the global model change vector $\vec{v}_g$ to generate the unit vector $\hat{v}_g = \vec{v}_g/\|\vec{v}_g\|$. The projection vector calculator then calculates the projection vector $p_k^{t_i+\Delta}$ 403 by performing an inner product operation $\langle \vec{v}_k, \hat{v}_g \rangle$ to project the local model change vector $\vec{v}_k$ onto $\hat{v}_g$, and multiplying the result by $\hat{v}_g$.

The projection vector $p_k^{t_i+\Delta}$ 403 represents the component of client k's local model parameters that points in the same direction as updates the global model has already received from other clients. Therefore, this projection vector is considered an ineffective parameter and is not used for the global model update.

The orthogonal vector extractor extracts the orthogonal vector

$$o_k^{t_i+\Delta} = \vec{v}_k - p_k^{t_i+\Delta}$$

401, which has components in a direction orthogonal to the global model change direction, by subtracting the projection vector $p_k^{t_i+\Delta}$ 403 from the local model change vector $\vec{v}_k$. This orthogonal vector represents new learning information among the local model parameters of the client k that has not yet been reflected in the global model.

The global model updater generates the modified global model $\omega^{ti+1}$ by multiplying the orthogonal vector $o_k^{t_i+\Delta}$ 401 by a global weighting factor $\eta$ and adding the result to the current global model $\omega^{ti}$. Through this update process, the global model updater can improve the convergence stability and accuracy of the global model by removing ineffective components and reflecting only new directional components.

The asynchronous federated learning system that improves the convergence of the global model by removing ineffective (weight staleness) model parameters in an asynchronous federated learning environment includes a global model receiver for receiving a global model, a local model receiver for receiving local model parameters learned at a client based on the received global model, and a difference vector calculator for calculating a difference vector between the global model and the local model parameters. The system includes a projection vector calculator for calculating a projection vector of the local model parameters based on the difference vector, an orthogonal vector extractor for extracting a vector in a direction orthogonal to the projection vector, and a global model updater for generating a modified global model by applying the orthogonal vector to the global model.

The projection vector calculator computes the projection vector by performing an inner product operation on the local model parameters with respect to a unit vector that is normalized in the direction of the difference vector between the local model parameters and the global model, and then multiplying the inner product result by that unit vector. The orthogonal vector extractor calculates an orthogonal vector, which contains only components orthogonal to the difference vector, by subtracting the projection vector from the local model parameters. The global model updater generates a modified global model by multiplying the orthogonal vector by a pre-set global weighting factor and then adding the result to the global model.

The local model receiver is configured to receive, from each client, the global model at the time the local training started and the local model parameters trained based on that global model, so as to identify the difference between temporally mismatched global models. The difference vector calculator generates a difference vector by calculating the parameter difference between the global model at the time the client started local training and the current global model. The global model transmitter transmits the modified global model generated by the global model updater to the clients, enabling each client to perform subsequent local training based on the modified global model.

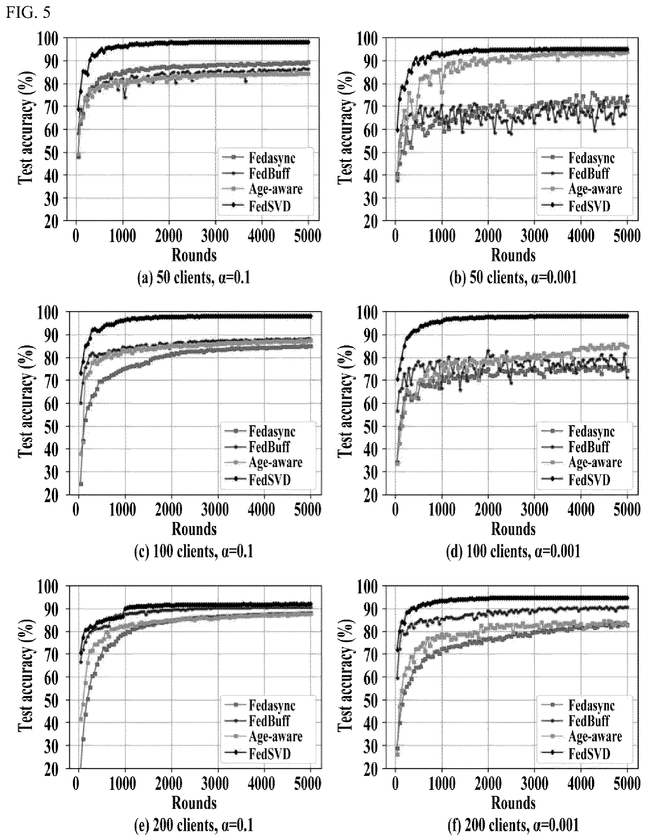

FIG. 5 is a diagram that visually compares and explains the performance of the global model according to changes in data distribution and the number of clients in an asynchronous federated learning system based on ineffective weight vector decomposition.

FIG. 5 consists of six sub-diagrams, (a) through (f), which are categorized according to the parameter $\alpha$ value of the Dirichlet distribution (0.1, 0.001) and the number of clients (50, 100, 200).

Each sub-diagram plots the convergence performance of the global model as a graph, with the number of communication rounds on the x-axis and the test accuracy (%) on the y-axis.

In each experiment of asynchronous federated learning, after a client performs local training, it transmits the local model parameters to the server. The server's difference vector calculator then calculates the difference vector between the global model at the time the client started local training and the current global model.

The projection vector calculator calculates a projection vector by performing an inner product operation on the local model parameters with respect to a unit vector normalized in the direction of the difference vector and multiplying the result by the unit vector.

The orthogonal vector extractor extracts an orthogonal vector, which contains only components orthogonal to the difference vector, by subtracting the projection vector from the local model parameters.

The global model updater generates a modified global model by multiplying the extracted orthogonal vector by a pre-set global weight coefficient $\eta$ and adding the result to the existing global model.

The global model transmitter transmits the updated global model back to the client, so that subsequent local training is performed based on the modified global model.

FIG. 5(a) illustrates the performance with 50 clients and a relatively non-uniform data distribution ($\alpha$ = 0.1).

The proposed asynchronous federated learning system based on ineffective weight vector decomposition shows stable convergence performance in all client number and data distribution environments.

The global model updater removes the ineffective learning direction by eliminating the projection vector and reflecting only the orthogonal vector, resulting in fast and accurate convergence of the global model.

The comparison targets, Fedasync, FedBuff, and Age-aware, show a certain level of accuracy when the number of clients is small, but their convergence becomes unstable or their accuracy decreases as the number of rounds increases.

FIG. 5(b) illustrates the case with 50 clients and an extremely imbalanced data distribution ($\alpha$ = 0.001).

In this case, the local model receiver receives, from each client, the global model at the start of local training and the local model parameters trained based on that global model. The difference vector calculator then calculates the parameter difference due to the time mismatch to compute a difference vector.

The projection vector calculator and the orthogonal vector extractor update the global model by removing the ineffective direction based on the difference vector and generating an orthogonal vector that reflects only meaningful learning information.

Consequently, the proposed system stably maintains a high accuracy of 95% or more and shows superior convergence performance compared to existing algorithms.

FIG. 5(c) illustrates the experimental results with the number of clients increased to 100 and a data distribution of $\alpha$=0.1.

As the number of clients increases, the problem of ineffective parameters in an asynchronous situation occurs more frequently, but the model convergence is not hindered because the orthogonal vector extractor removes the unnecessary learning directions.

The global model updater reflects only the updated orthogonal vector in a uniform manner for all client numbers, so the model convergence performance does not degrade despite the diversity in data and learning participation times.

FIG. 5(d) illustrates an environment with 100 clients and a very imbalanced data distribution.

In this environment, the performance instability of existing algorithms greatly increases, but the asynchronous federated learning system based on ineffective weight vector decomposition of the present disclosure still converges to a high accuracy of nearly 98%.

This is due to the structure that accurately removes ineffective parameters through the difference vector calculator and the orthogonal vector extractor, unlike existing techniques that adjust weights based only on simple time delay without determining ineffectiveness.

FIG. 5(e) illustrates the results of an experiment in a large-scale environment with 200 clients.

The global model receiver individually provides the global model to all clients, and the local model receiver receives, from the server, the local model parameters that clients have trained at different time points.

The system of the present disclosure effectively removes the diversity of learning directions and the redundancy of ineffective directions, which increase as the number of clients increases, through the orthogonal vector extractor, ensuring that the convergence of the global model is not distorted.

FIG. 5(f) illustrates the results under the most complex conditions, i.e., 200 clients and an extremely imbalanced data distribution.

Even in this environment, the proposed system achieves a high accuracy of 94.9% by reflecting only meaningful learning directions through the orthogonal vector extractor, adjusting it by multiplying with a global weighting factor, and then reflecting it in the global model updater.

This empirically demonstrates that the proposed projection-based removal method operates robustly even in situations where effectiveness accumulates in a complex manner as the number of clients increases.

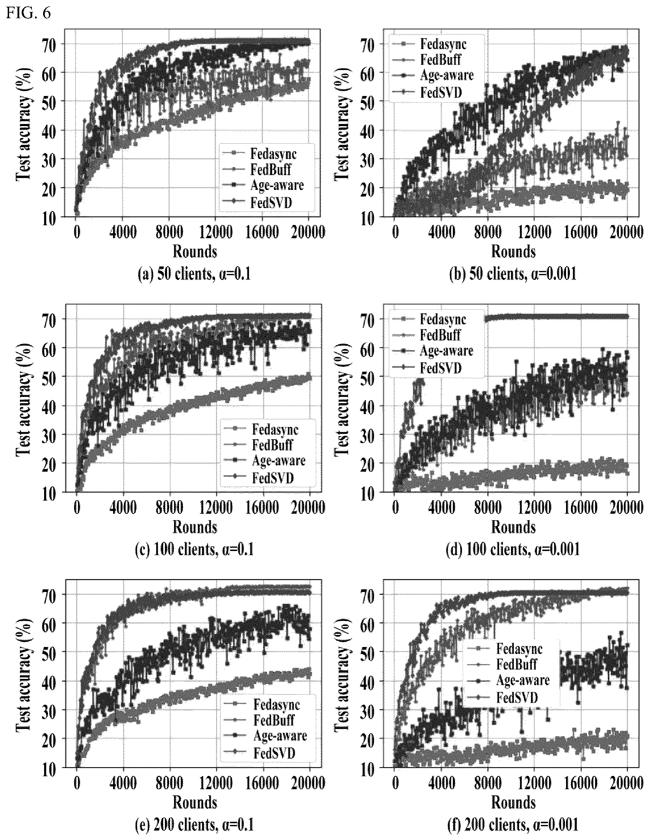

FIG. 6 is a diagram illustrating the model performance on the CIFAR-10 dataset according to changes in data distribution and the number of clients.

Specifically, FIG. 6 is a diagram that explains how the test accuracy of the global model converges according to the number of clients and the degree of data distribution imbalance, to evaluate the performance of the asynchronous federated learning system based on ineffective weight vector decomposition on the CIFAR-10 dataset.

FIG. 6 is composed of a total of six sub-diagrams, each configured according to a combination of the number of clients (50, 100, 200) and the Dirichlet distribution parameter $\alpha$ (0.1, 0.001).

Each sub-diagram shows the number of communication rounds on the x-axis and the test accuracy (%) on the y-axis, and displays the test accuracy curves of the proposed asynchronous federated learning system based on ineffective weight vector decomposition (FedSVD) and the existing comparison algorithms, Fedasync, FedBuff, and Age-aware.

FIG. 6(a) illustrates the comparison result of the global model's test accuracy according to each federated learning round in an environment with 50 clients participating and a weak data imbalance (Dirichlet $\alpha$ = 0.1).

The global model receiver transmits the same global model to clients, and each client generates local model parameters by performing local training based on that global model.

The local model receiver receives, from each client, the global model at the start of local training and the local model parameters trained based on that global model.

The difference vector calculator generates a difference vector by calculating the parameter difference between the global model at the time the client started local training and the current global model.

The projection vector calculator calculates a projection vector by performing an inner product operation on the local model parameters with respect to a unit vector normalized in the direction of the difference vector, and then multiplying the result by the unit vector again.

The orthogonal vector extractor calculates an orthogonal vector that includes only components orthogonal to the difference vector by subtracting the said projection vector from the local model parameters.

The global model updater generates a modified global model by adding the result of multiplying the orthogonal vector by a pre-set global weight coefficient to the global model.

The global model transmitter transmits the modified global model to the clients to be reflected in subsequent local training.

According to this configuration, FedSVD converges quickly and stably with an accuracy of about 71%, showing superior performance to FedBuff (about 63%) and Age-aware (about 70%), and a significant difference compared to Fedasync (about 56%).

FIG. 6(b) illustrates the global model convergence performance with 50 clients and a very severely imbalanced data state (Dirichlet $\alpha$ = 0.001).

In this environment, Fedasync converges at a level below 20%, FedBuff remains at 34%, and Age-aware at a 66.8% level.

In contrast, the proposed asynchronous federated learning system based on ineffective weight vector decomposition achieves a high accuracy of 66.3% by effectively removing the ineffective direction and reflecting only the meaningful learning direction through the precise operations of the difference vector calculator, projection vector calculator, orthogonal vector extractor, and global model updater.

This result visually demonstrates that the system of the present disclosure can maintain robust convergence performance even in a severe non-IID environment.

FIG. 6(c) illustrates a situation with an increased number of clients to 100 and a relatively weak data imbalance ($\alpha$ = 0.1).

As the number of clients increases, the temporal mismatch of local model parameters received by the local model receiver increases, and the number of ineffective parameters that the difference vector calculator must process increases.

However, the orthogonal vector extractor removes these ineffective parameters and ensures that only meaningful directions are reflected during the global model update.

As a result, FedSVD converges with an accuracy of about 70.9%, showing performance close to FedBuff (about 71.1%) and significantly outperforming Fedasync (about 49.5%) and Age-aware (about 64.7%).

FIG. 6(d) illustrates experimental results in an environment with 100 clients and a very imbalanced data distribution ($\alpha$ = 0.001).

Under this condition, the convergence performance of existing algorithms deteriorates significantly, with Fedasync below 20%, and Age-aware and FedBuff also at around 40-50%.

The global model updater of the present disclosure updates the global model using only the orthogonal vector to ensure that no ineffective directions are included, and the global model transmitter provides the modified global model to clients, thereby ensuring that subsequent local training is not distorted.

As a result, FedSVD maintains an accuracy of 70.7%, showing overwhelming superiority over other algorithms.

FIG. 6(e) illustrates convergence performance under the condition of a large-scale environment with 200 clients and a relatively balanced distribution ($\alpha$ = 0.1).

The global model receiver transmits the global model to 200 clients at individual time points, further intensifying the asynchronicity among clients.

As a result, although the directional diversity of the difference vectors received by the difference vector calculator and the proportion of ineffective components increase, the orthogonal vector extractor removes all ineffective components and extracts only the orthogonal components.

The orthogonal vector, multiplied by a global weighting factor, is added to the global model for updating, and the global model transmitter provides it to the clients.

As a result, FedSVD maintains an accuracy of 70.6%, showing superior performance to FedBuff (about 72.4%), Age-aware (about 59.0%), and Fedasync (about 42.9%).

FIG. 6(f) illustrates results under the most extreme conditions: 200 clients and a very imbalanced data distribution environment of $\alpha = 0.001$.

Under this condition, Fedasync shows an accuracy of about 20.2%, Age-aware about 46.6%, and FedBuff about 71.4%, but all have very low or unstable convergence speeds and performance.

However, the asynchronous federated learning system based on ineffective weight vector decomposition removes ineffective parameters at every learning stage and updates the global model using only orthogonal components, thus converging to an accuracy of 70.4% and demonstrating robust learning performance.

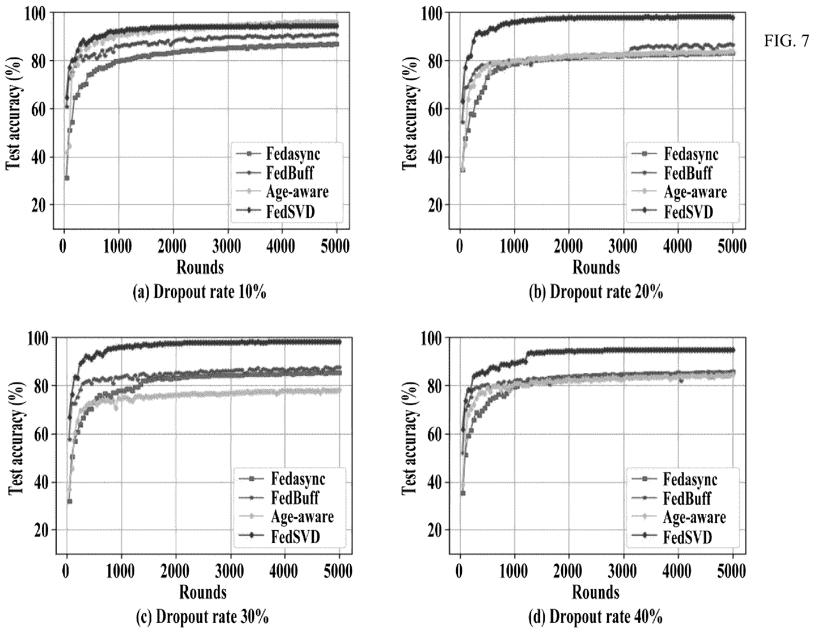

FIG. 7 is a diagram visually comparing the test accuracy of the asynchronous federated learning system based on ineffective weight vector decomposition on the MNIST dataset according to client dropout scenarios. FIG. 7 consists of four sub-diagrams, (a) through (d), each showing the test accuracy convergence trend of the proposed system and comparison algorithms under conditions where the dropout rate is set to 10%, 20%, 30%, and 40%, respectively.

Each sub-diagram in FIG. 7 has the number of federated learning rounds on the x-axis and the test accuracy (%) on the y-axis, and compares the accuracy changes of the FedSVD, Fedasync, FedBuff, and Age-aware algorithms with solid or dashed line graphs. All experiments were conducted in a non-IID data environment with 100 clients and a Dirichlet distribution parameter $\alpha = 0.1$, and in each communication round, some clients were randomly selected to be dropped out and not participate in the global model update.

FIG. 7(a) illustrates the test accuracy convergence performance of the global model under the condition that 10% of clients are dropped out in each communication round.

The global model receiver transmits the same global model to 90% of the clients in each communication round.

The local model receiver receives the local model parameters generated through local training and the global model at the start of local training from the clients who performed local training.

The difference vector calculator calculates a difference vector by computing the parameter difference between the two received global models.

The projection vector calculator calculates a projection vector by performing an inner product of the local model parameters with respect to a unit vector normalized in the direction of the difference vector and then multiplying it.

The orthogonal vector extractor generates an orthogonal vector containing components orthogonal to the difference vector by subtracting the projection vector from the local model parameters.

The global model updater generates an updated global model by multiplying the orthogonal vector by a global weighting factor and adding it to the existing global model.

The global model transmitter transmits the updated global model to the clients for the next round.

According to this structure, the proposed FedSVD converged to an accuracy of 94.4%, which is higher than Fedasync (86.7%) and FedBuff (90.7%), and close to the performance of Age-aware (96.0%). FedSVD achieves stable convergence even when dropouts occur, due to its update method based on orthogonal components from which ineffective parameters have been removed.

FIG. 7(b) illustrates the test accuracy convergence under the condition that 20% of clients are dropped out.

The global model receiver transmits the global model to 80% of the clients, and the local model receiver receives the local model parameters, which are the result of learning, and the global model at the start of local training from those clients.

The difference vector calculator calculates the difference vector between the two global models, the projection vector calculator extracts only the components projected in the direction of the difference vector, and the orthogonal vector extractor subtracts the projection vector from the local model parameters to calculate the orthogonal vector.

The global model updater generates an updated global model by adding the value obtained by multiplying the orthogonal vector by a global weighting factor to the existing global model, and the global model transmitter transmits the global model to the clients of the next round.

According to this configuration, FedSVD converged to an accuracy of 98.1% even with a 20% dropout rate. On the other hand, Fedasync (82.9%), FedBuff (86.1%), and Age-aware (83.5%) show that their convergence performance dropped sharply with dropouts. FedSVD minimized learning direction distortion by excluding ineffective directional components during the global model update, thereby achieving robust convergence even in a dropout environment.

FIG. 7(c) illustrates test accuracy convergence curves under a 30% dropout condition.

The global model receiver transmits the global model to 70% of the clients, and the local model receiver receives the local model parameters and the global model at the start of local training from those clients.

The difference vector calculator calculates the difference vector of the two global models, the projection vector calculator extracts the projected components in the direction of the difference vector, and then the orthogonal vector extractor calculates the orthogonal vector by subtracting the projection vector from the local model parameters.

The global model updater generates an updated global model by multiplying the orthogonal vector by a global weighting factor and then adding it to the existing global model.

The global model transmitter transmits the updated global model to the clients of the next round.

FedSVD achieved a high accuracy of 98.2% even under the 30% dropout condition, which is absolutely superior to Fedasync (85.3%), FedBuff (87.0%), and Age-aware (77.7%). In particular, the convergence of Age-aware becomes highly unstable as the dropout rate increases, whereas FedSVD maintained convergence stability by removing ineffective parameters.

FIG. 7(d) illustrates changes in test accuracy under the most extreme scenario, a 40% dropout rate condition.

The global model receiver transmits the global model to 60% of the clients each round, and the local model receiver receives the local model parameters and the corresponding global model at that time point from those clients.

The difference vector calculator calculates differences between the temporally mismatched global models, the projection vector calculator calculates the directional components of the difference vector, and the orthogonal vector extractor subtracts this from the local model parameters to extract the orthogonal vector.

The global model updater generates an updated global model by multiplying the orthogonal vector by a global weighting factor and adding it to the existing global model.

The global model transmitter transmits this to the clients of the next round.

According to this structure, FedSVD converged to a test accuracy of 94.9% even in a 40% dropout environment, which is a significantly higher performance than Fedasync (85.4%), FedBuff (84.8%), and Age-aware (84.1%). This is because the learning direction distortion and instability that can arise from a high dropout rate were effectively eliminated through the orthogonal vector-based update method.

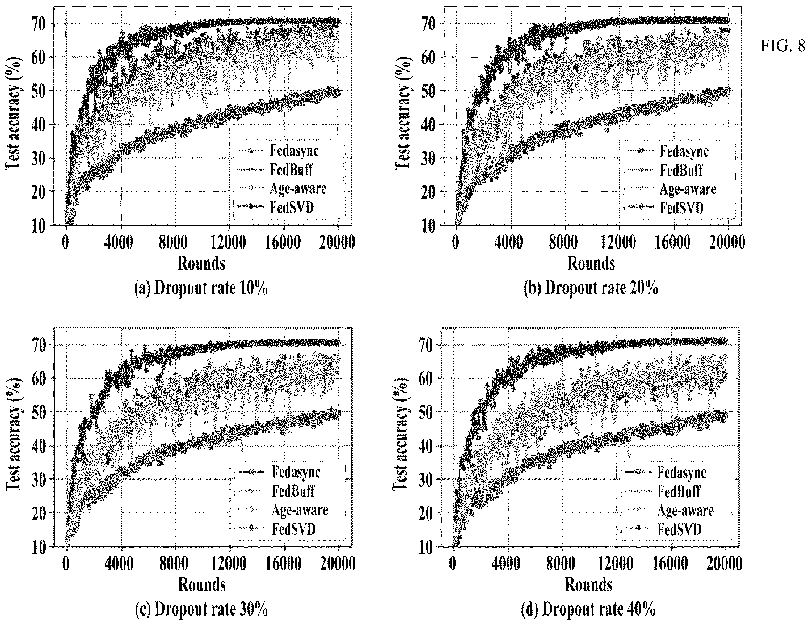

FIG. 8 is a diagram explaining the performance of asynchronous federated learning under a dropout scenario, and visually illustrates experimental results configured to confirm how stably the asynchronous federated learning system based on ineffective weight vector decomposition can perform learning even in a dropout environment, based on the CIFAR-10 dataset.

FIG. 8 consists of four sub-diagrams, (a) to (d), each showing the convergence pattern of test accuracy for various algorithms under conditions where the dropout rate is set to 10%, 20%, 30%, and 40%, respectively.

The x-axis of each diagram represents the number of federated learning rounds, and the y-axis represents the test accuracy (%). The graph includes the performance curves of the proposed FedSVD and the existing techniques Fedasync, FedBuff, and Age-aware.

All experiments were conducted in a non-IID environment with 100 clients and a Dirichlet distribution $\alpha$ = 0.1, and in each round, a portion of the clients was randomly dropped out and not allowed to participate in the global model update.

FIG. 8(a) illustrates the test accuracy convergence patterns of the proposed system and existing algorithms under the condition that 10% of clients are dropped out in each communication round.

The global model receiver transmits the same global model to 90% of the clients in each round.

The local model receiver receives the local model parameters from the clients that performed local training, as well as the global model at the time point when those clients began their local training.

The difference vector calculator calculates a difference vector by computing the parameter difference between the two received global models.

The projection vector calculator calculates a projection vector by performing an inner product of the local model parameters with respect to a unit vector normalized in the direction of the difference vector, and then multiplying the inner product result by the unit vector.

The orthogonal vector extractor generates an orthogonal vector that includes only directional components orthogonal to the difference vector by subtracting the projection vector from the local model parameters.

The global model updater generates a modified global model by multiplying the orthogonal vector by a global weighting factor and then adding the result to the global model.

The global model transmitter transmits the modified global model to the clients of the next communication round.

Based on this structure, FedSVD achieved a test accuracy of about 70.7% under the 10% dropout condition. This shows superior convergence performance compared to FedBuff (69.0%), Age-aware (63.7%), and Fedasync (49.4%), and notably showed a rapid increase in accuracy in the early stages of learning.

FIG. 8(b) illustrates the test accuracy convergence curve under the condition that 20% of clients are dropped out in each communication round.

The global model receiver transmits the global model to 80% of clients that were not dropped out, and the local model receiver receives the local model parameters and the global model at the start of local training from the client after the local training is completed.

The difference vector calculator calculates a difference vector based on the difference value between the two global models.

The projection vector calculator extracts the directional component of the corresponding difference vector, the orthogonal vector extractor calculates the orthogonal vector from which the ineffective parameters have been removed, and the global model updater generates a modified global model by adding the orthogonal vector multiplied by a global weighting factor to the global model.

The global model transmitter transmits that global model to the clients of the next communication round.

Through this procedure, FedSVD maintained an accuracy of 70.9% even under the 20% dropout condition, which is a better result than FedBuff (66.5%), Age-aware (64.1%), and Fedasync (49.8%).

FIG. 8(c) shows test accuracy convergence curves under the condition that 30% of clients are dropped out.

The global model receiver transmits the global model to 70% of the clients, and the local model receiver receives the local model parameters and the global model at the start of learning from those clients.

The difference vector calculator calculates a difference vector by computing the difference due to the time mismatch.

The projection vector calculator calculates a projection vector projected in the direction of the difference vector, and the orthogonal vector extractor generates an orthogonal vector in which only the orthogonal directional components remain after removing the projection vector.

The global model updater reflects the corresponding orthogonal vector in the global model by multiplying it by a global weighting factor, and the global model transmitter delivers the updated global model to the clients.

FedSVD also achieved an accuracy of 70.6% under this condition, which surpasses FedBuff (64.2%), Age-aware (63.9%), and Fedasync (49.5%). Despite the increase in dropouts, the accuracy of FedSVD remained almost unchanged, and the stability of the ineffective parameter removal method was experimentally proven.

FIG. 8(d) illustrates performance changes under the most extreme condition of a 40% client dropout.

The global model receiver transmits the global model to 60% of the clients, and the local model receiver receives the local model parameters and the global model at the start of learning from those clients.

The difference vector calculator calculates a difference vector by computing the difference between the two global models.

The projection vector calculator calculates a projection vector for the corresponding difference vector, and the orthogonal vector extractor calculates an orthogonal vector by subtracting the projection vector from the local model parameters.

The global model updater generates a modified global model by adding the value obtained by multiplying the orthogonal vector by a global weighting factor to the global model.

The global model transmitter transmits the modified global model to the clients of the next round.

Through this structure, FedSVD maintained a test accuracy of 71.2% even under the 40% dropout condition, which is a significantly higher figure than FedBuff (61.6%), Age-aware (63.5%), and Fedasync (48.6%).

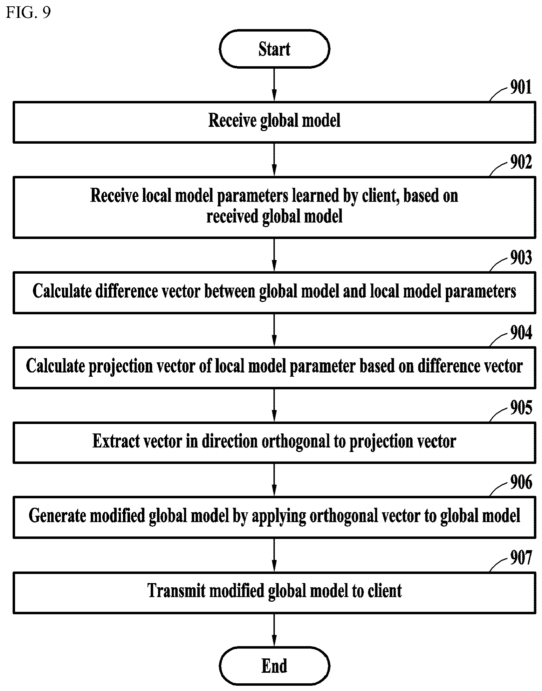

FIG. 9 is a flowchart sequentially illustrating the entire procedure of an asynchronous federated learning method based on ineffective weight vector decomposition according to an embodiment of the present disclosure.

The asynchronous federated learning method based on ineffective weight vector decomposition according to an embodiment receives a global model (901).

The global model receiver receives the latest global model held by the server of the federated learning system.

The global model receiver prepares to transmit the global model to each client. This global model is used as the initial baseline model for the client's local training.

The asynchronous federated learning method based on ineffective weight vector decomposition according to an embodiment receives local model parameters trained by the client, based on the received global model (902).

The local model receiver receives, together, the local model parameters generated as a result of local training performed by the client, and the baseline global model at the time the local model parameters were generated.

The local model receiver aims to accurately evaluate the client's learning contribution based on the relationship between the baseline global model and the local model parameters.

The asynchronous federated learning method based on ineffective weight vector decomposition according to an embodiment calculates a difference vector between the global model and the local model parameters (903).

The difference vector calculator generates a difference vector by calculating the parameter difference between the baseline global model and the current global model.

The difference vector calculator provides the basic information for the direction vector for the subsequent projection operation by extracting the parameter change direction between the baseline global model and the current global model in vector form.

The asynchronous federated learning method based on ineffective weight vector decomposition according to an embodiment calculates a projection vector of the local model parameters based on the difference vector (904).

The projection vector calculator generates a unit vector by normalizing the difference vector calculated in the step, and calculates a scalar value by performing an inner product operation of the local model parameters with respect to the unit vector.

The projection vector calculator calculates a projection vector projected in the direction of the difference vector by multiplying the scalar value by the unit vector in the same direction.

That is, the projection vector calculator performs the function of separating and extracting only the directional component of the difference vector from the local model parameters.

The asynchronous federated learning method based on ineffective weight vector decomposition according to an embodiment extracts a vector in a direction orthogonal to the projection vector (905).

The orthogonal vector extractor extracts an orthogonal vector that includes only components orthogonal to the difference vector by subtracting the calculated projection vector from the local model parameters.

The orthogonal vector extractor calculates the orthogonal vector to remove the ineffective directional component and preserve only the independent parameter change component that substantially contributes to learning.

The asynchronous federated learning method based on ineffective weight vector decomposition according to an embodiment generates a modified global model by applying the orthogonal vector to the global model (906).

The global model updater generates a modified global model by multiplying the extracted orthogonal vector by the global weighting factor and then adding the result to the current global model.

The global model updater ensures that by reflecting only the non-ineffective, valid components from the client's local training results to update the global model, accumulated bias in the asynchronous environment can be corrected and convergence stability can be secured.

The asynchronous federated learning method based on ineffective weight vector decomposition according to an embodiment transmits the modified global model to the clients (907).

The global model transmitter transmits the modified global model generated in the global model updater to the clients that will participate in the next communication round.

The global model transmitter plays the role of ensuring that clients can perform learning based on the latest global model even in an asynchronous federated learning environment where clients start local training at different time points.

The asynchronous federated learning method includes the steps of receiving a global model, receiving local model parameters learned by a client based on the received global model, calculating a difference vector between the global model and the local model parameters, calculating a projection vector of the local model parameters based on the difference vector, extracting a vector in a direction orthogonal to the projection vector,

generating a modified global model by applying the orthogonal vector to the global model, and transmitting the modified global model to the client.

In the method, the step of calculating the projection vector includes a step of calculating the projection vector by performing an inner product operation on the local model parameters with respect to a unit vector normalized in the direction of the difference vector, and multiplying the result by the unit vector. The step of extracting the orthogonal vector includes a step of calculating an orthogonal vector that includes only components orthogonal to the difference vector by subtracting the projection vector from the local model parameters. The step of generating the modified global model includes a step of generating the modified global model by multiplying a global weighting factor by the orthogonal vector and then adding the result to the global model.

Furthermore, the method further includes a step of performing difference vector calculation and orthogonal vector extraction only when a set threshold, based on the number of updates or the Euclidean distance between the global model at the time the local model parameters were generated and the current global model, is exceeded, so as to determine whether the local model parameters are ineffective parameters.

According to an embodiment, it is possible to extract the ineffective direction of a global model by quantitatively calculating a parameter difference between a past global model, which a client used as a baseline, and a current global model.

According to an embodiment, by decomposing the local model parameters into a projection vector through an inner product with the ineffective direction vector, it is possible to remove ineffective components and reflect only orthogonal components in global model update.

According to an embodiment, a parameter decomposition-based update method prevents the reflection of redundant updates, thereby reducing the waste of communication resources and improving overall learning efficiency.

According to an embodiment, it is possible to minimize the bias problem of the global model caused by the accumulation of ineffective components and to promote more stable and reliable model convergence.

According to an embodiment, compared to an existing staleness-based importance adjustment method, it is possible to minimize information loss by precisely reflecting the directionality and actual contribution of parameters.

According to an embodiment, it is possible to maintain stable learning accuracy even in an asynchronous environment with communication delays or participation imbalances among clients.

The apparatus described above may be implemented as a hardware component, a software component, and/or a combination of hardware components and software components. For example, the apparatus and components described in the embodiments may be achieved using one or more general purpose or special purpose computers, such as, for example, a processor, a controller, an arithmetic logic unit (ALU), a digital signal processor, a microcomputer, a field programmable array (FPA), a programmable logic unit (PLU), a microprocessor, or any other device capable of executing and responding to instructions. The processing device may execute an operating system (OS) and one or more software applications executing on the operating system. In addition, the processing device may access, store, manipulate, process, and generate data in response to execution of the software. For ease of understanding, the processing apparatus may be described as being used singly, but those skilled in the art will recognize that the processing apparatus may include a plurality of processing elements and/or a plurality of types of processing elements. For example, the processing apparatus may include a plurality of processors or one processor and one controller. Other processing configurations, such as a parallel processor, are also possible.

The software may include computer programs, code, instructions, or a combination of one or more of the foregoing, configure the processing apparatus to operate as desired, or command the processing apparatus, either independently or collectively. In order to be interpreted by a processing device or to provide instructions or data to a processing device, the software and/or data may be embodied permanently or temporarily in any type of a machine, a component, a physical device, a virtual device, a computer storage medium or device, or a transmission signal wave. The software may be distributed over a networked computer system and stored or executed in a distributed manner. The software and data may be stored in one or more computer-readable recording media.

The methods according to the embodiments of the present disclosure may be implemented in the form of a program command that can be executed through various computer means and recorded in a computer-readable medium. The computer-readable medium can store program commands, data files, data structures or combinations thereof. The program commands recorded in the medium may be specially designed and configured for the present disclosure or be known to those skilled in the field of computer software. Examples of a computer-readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include machine language code created by a compiler and high-level language code executable by a computer using an interpreter and the like. The hardware devices described above may be configured to operate as one or more software modules to perform the operations of the embodiments, and vice versa.

Although the present disclosure has been described with reference to limited embodiments and drawings, it should be understood by those skilled in the art that various changes and modifications may be made therein. For example, the described techniques may be performed in a different order than the described methods, and/or components of the described systems, structures, devices, circuits, etc., may be combined in a manner that is different from the described method, or appropriate results may be achieved even if replaced by other components or equivalents.

Therefore, other embodiments, other examples, and equivalents to the claims are within the scope of the following claims.

**Claims**

1. An asynchronous federated learning system based on ineffective weight vector decomposition for improving global model convergence by removing ineffective (weight staleness) model parameters in an asynchronous federated learning environment, the system comprising:

   a global model receiver for receiving a global model;
   a local model receiver for receiving local model parameters learned by a client based on the received global model;
   a difference vector calculator for calculating a difference vector between the global model and the local model parameters;
   a projection vector calculator for extracting a projection vector of the local model parameters based on the difference vector;
   an orthogonal vector extractor for extracting a vector in a direction orthogonal to the projection vector; and
   a global model updater for generating a modified global model by applying the orthogonal vector to the global model.

2. The asynchronous federated learning system according to claim 1, wherein the global model updater is configured to:

   calculate a cosine similarity between the projection vector and an update direction of the global model; and
   if the cosine similarity is negative, refrain from reflecting the projection vector and the orthogonal vector in a global model update.

3. The asynchronous federated learning system according to claim 1 or 2, wherein the global model updater is configured to:

if a magnitude of the projection vector is greater than a magnitude of an update vector of the global model, adjust the magnitude of the projection vector and reflect it in the global model, instead of removing the projection vector.

4. The asynchronous federated learning system according to one of claims 1 to 3, wherein the global model updater is configured to:

reflect only an excess magnitude of the projection vector in the global model, or
adjust a magnitude of each of the projection vector and the orthogonal vector according to a predefined scaling coefficient and reflect the magnitude in the global model.

5. The asynchronous federated learning system according to one of claims 1 to 4, wherein the local model receiver is configured to receive, from each client, global model parameters at a start time of learning and local model parameters after completion of learning, and
the difference vector calculator is configured to calculate a learned local update vector based on a difference between the two model parameters.

6. The asynchronous federated learning system according to one of claims 1 to 5, wherein the projection vector calculator is configured to:
calculate a projection vector by performing an inner product operation on the local model parameters with respect to a unit vector normalized in a direction of the difference vector between the local model parameters and the global model, and multiplying a result of the inner product by the unit vector again.

7. The asynchronous federated learning system according to one of claims 1 to 6, wherein the orthogonal vector extractor is configured to:
calculate an orthogonal vector comprising only components orthogonal to the difference vector by subtracting the projection vector from the local model parameters.

8. The asynchronous federated learning system according to one of claims 1 to 7, wherein the global model updater is configured to:
generate a modified global model by summing the global model and the orthogonal vector, wherein a pre-set global weight coefficient ($\eta$) is multiplied by the orthogonal vector, and a result thereof is added to the global model.

9. The asynchronous federated learning system according to one of claims 1 to 8, wherein the local model receiver is configured to:
receive, from each client, the global model at a time when local training started and the local model parameters trained based on the global model together, so as to identify a difference between temporally mismatched global models.

10. The asynchronous federated learning system according to one of claims 1 to 9, wherein the difference vector calculator is configured to:
generate a difference vector by calculating a parameter difference between the global model at a time when the client started local training and a current global model.

11. The asynchronous federated learning system according to one of claims 1 to 10, further comprising a global model transmitter configured to:
transmit the modified global model generated by the global model updater to clients, to enable each client to perform subsequent local training based on the modified global model.

12. An asynchronous federated learning method based on ineffective weight vector decomposition, the asynchronous federated learning method comprising:

receiving a global model;
receiving local model parameters learned by a client based on the received global model;
calculating a difference vector between the global model and the local model parameters;
calculating a projection vector of the local model parameters based on the difference vector;
extracting a vector in a direction orthogonal to the projection vector;
generating a modified global model by applying the orthogonal vector to the global model; and
transmitting the modified global model to a client.

13. The asynchronous federated learning method according to claim 12, wherein the calculating of the projection vector comprises:

calculating a projection vector by performing an inner product operation on the local model parameters with respect to a unit vector normalized in a direction of the difference vector, and multiplying a result of the inner product by the unit vector,
wherein the extracting of the orthogonal vector comprises:
calculating an orthogonal vector comprising only components orthogonal to the difference vector by subtracting the projection vector from the local model parameters.

14. The asynchronous federated learning method according to claim 12 or 13, wherein the generating of the modified global model comprises:
generating a modified global model by multiplying a pre-set global weight coefficient by the orthogonal vector and adding a result thereof to the global model.

15. The asynchronous federated learning method according to one of claims 12 to 14, further comprising:
to determine whether the local model parameters are ineffective parameters, performing the difference vector calculation and the orthogonal vector extraction only when a set threshold, based on a number of updates or a Euclidean distance between a global model at a time the local model parameters were generated and a current global model, is exceeded.

FIG. 1

<Synchronous vs Asynchronous FL>

FIG. 2

<u>200</u>

FIG. 3

<u>300</u>

Calculation of updated weights vector

<Overview of FedSVD>

FIG. 4

**400**

Global model change

Naive Aggregation

$\omega^{t_{i-1}}$

$\omega^{t_i}$

$\omega^{t_i} - \omega^{t_{i-2}}$

403

$\omega^{t_{i+1}}$

Aggregation of decomposed orthogonal weight vector

$\omega^{t_{i-2}}$

$w_k^{t_{i+\Delta}}$

$w_k^{t_{i+\Delta}} - \omega^{t_{i-2}}$

stale local weight vector

401

FIG. 5

(a) 50 clients, α=0.1

(b) 50 clients, α=0.001

(c) 100 clients, α=0.1

(d) 100 clients, α=0.001

(e) 200 clients, α=0.1

(f) 200 clients, α=0.001

FIG. 6

(a) 50 clients, α=0.1

(b) 50 clients, α=0.001

(c) 100 clients, α=0.1

(d) 100 clients, α=0.001

(e) 200 clients, α=0.1

(f) 200 clients, α=0.001

(a) Dropout rate 10%

(b) Dropout rate 20%

(c) Dropout rate 30%

(d) Dropout rate 40%

FIG. 7

FIG. 8

(a) Dropout rate 10%

(b) Dropout rate 20%

(c) Dropout rate 30%

(d) Dropout rate 40%

FIG. 9

```
                        ┌──────────┐
                        │  Start   │
                        └────┬─────┘
                             │                              ╭─901
        ┌────────────────────▼─────────────────────────────────┐
        │              Receive global model                     │
        └────────────────────┬─────────────────────────────────┘
                             │                              ╭─902
        ┌────────────────────▼─────────────────────────────────┐
        │   Receive local model parameters learned by client,   │
        │          based on received global model               │
        └────────────────────┬─────────────────────────────────┘
                             │                              ╭─903
        ┌────────────────────▼─────────────────────────────────┐
        │ Calculate difference vector between global model and  │
        │               local model parameters                  │
        └────────────────────┬─────────────────────────────────┘
                             │                              ╭─904
        ┌────────────────────▼─────────────────────────────────┐
        │ Calculate projection vector of local model parameter  │
        │              based on difference vector               │
        └────────────────────┬─────────────────────────────────┘
                             │                              ╭─905
        ┌────────────────────▼─────────────────────────────────┐
        │   Extract vector in direction orthogonal to           │
        │                projection vector                      │
        └────────────────────┬─────────────────────────────────┘
                             │                              ╭─906
        ┌────────────────────▼─────────────────────────────────┐
        │ Generate modified global model by applying orthogonal │
        │              vector to global model                   │
        └────────────────────┬─────────────────────────────────┘
                             │                              ╭─907
        ┌────────────────────▼─────────────────────────────────┐
        │       Transmit modified global model to client        │
        └────────────────────┬─────────────────────────────────┘
                             │
                        ┌────▼─────┐
                        │   End    │
                        └──────────┘
```

Europäisches
Patentamt

European
Patent Office

Office européen
des brevets

# EUROPEAN SEARCH REPORT

Application Number

EP 25 20 5156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIYUAN WANG ET AL: "AsyncFedED: Asynchronous Federated Learning with Euclidean Distance based Adaptive Weight Aggregation", ARXIV.ORG, CORNELL UNIVERSITY LIBRARY, 201 OLIN LIBRARY CORNELL UNIVERSITY ITHACA, NY 14853, 27 May 2022 (2022-05-27), XP091233798, * abstract; section 4 * | 1-15 | INV. G06N20/00 |
| A | SHENGHONG DAI ET AL: "Buffer-based Gradient Projection for Continual Federated Learning", ARXIV.ORG, CORNELL UNIVERSITY LIBRARY, 201 OLIN LIBRARY CORNELL UNIVERSITY ITHACA, NY 14853, 3 September 2024 (2024-09-03), XP091874346, * section 4 * | 1-15 | |
| A | CN 118 504 717 B (ZHEJIANG LINYAN PRECISION TECH CO LTD) 22 October 2024 (2024-10-22) * paragraphs [0051] - [0089] * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 26 February 2026 | Keane, Shane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 25 20 5156**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-02-2026**

| Patent document cited in search report | Publication date | Patent family member(s) | Publication date |
|---|---|---|---|
| CN 118504717 B | 22-10-2024 | NONE | |

EPO FORM P0459

For more details about this annex : see Official Journal of the European Patent Office, No. 12/82

**EP 4 760 609 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240183867
- KR 1020250114547
- KR 102555268
- KR 102403476
- KR 102156303